# EUROPEAN PATENT SPECIFICATION

(11) **EP 3 386 716 B1**
(45) Date of publication and mention of the grant of the patent: **15.06.2022**
(21) Application number: 16801592.3
(22) Date of filing: 15.11.2016
(51) Int. Cl.: B29C 65/02, B29C 65/18, B65B 7/28, B65B 25/00

(54) **METHOD FOR THERMALLY BONDING TOGETHER A COVER FILM OF AN OPHTHALMIC LENS PACKAGE AND A BASE PART OF THE OPHTHALMIC LENS PACKAGE**
VERFAHREN ZUR THERMISCHEN VERBINDUNG EINER DECKFOLIE EINER OPHTHALMISCHEN LINSENVERPACKUNG MIT EINEM BASISTEIL DER OPHTHALMISCHEN LINSENVERPACKUNG
PROCÉDÉ DE LIAISON THERMIQUE D'UN FILM DE REVÊTEMENT D'UN EMBALLAGE DE LENTILLE OPHTALMIQUE AVEC UN ÉLÉMENT DE BASE DE L'EMBALLAGE DE LENTILLE OPHTALMIQUE

(30) Priority: 11.12.2015 US 201562266054 P
(43) Date of publication of application: 17.10.2018
(73) Proprietor: Alcon Inc., 1701 Fribourg (CH)
(72) Inventor: FISCHER, Alfred, 63868 Grosswallstadt (DE); KUTHER, Elmar, 63868 Grosswallstadt (DE); LANIG, Volker, 63868 Grosswallstadt (DE); OSTER, Peter, 5326 Schwaderloch (CH)
(74) Representative: Bohest AG
(86) International application number: PCT/IB2016/056871
(87) International publication number: WO 2017/098357

(56) References cited:
- WO-A1-2013/058711
- WO-A2-98/32587
- IT-A1- PR20 100 096
- US-A1- 2009 113 851

## Description

### FIELD OF THE INVENTION

The present invention relates to a method for thermally bonding together a cover film of an ophthalmic lens package and a base part of the ophthalmic lens package, and to a package holder for supporting the base part.

### BACKGROUND OF THE INVENTION

Ophthalmic lenses, such as contact lenses, particularly soft contact lenses, are typically packaged in packages such as blister packs by using automated packaging processes and automated packaging systems well-known in the art.

A method and an apparatus for packaging contact lenses in a tightly sealed manner are described for example in WO 98/32587. After a contact lens has been introduced into a depression of a base part (shell) of a blister pack, a predetermined amount of a storage and/or preservation liquid, such as saline, is dispensed into the depression. Thereafter, a cover film (foil) is placed on the base part of the blister pack and is thermally bonded to the base part. During bonding, a heatable contact plate is pressed onto the cover film arranged on the base part while the base part with the cover film arranged thereon is supported by a package holder. Another such method in which sealing portions with different sealing properties extend around the lens receiving portion of the package is shown in WO 2013/058711. US 2009/0113851 discloses a seal plate with a sealing face having an irregular shape to displace any droplets or moisture between a shell and a cover foil.

In case particles are located on the surface of the package holder, or in case the thickness of the base part varies in the region where the package holder supports the base part (typically a flange), or for any other reason, the base part may not evenly rest on the package holder during the bonding process. This may result in insufficient or non-uniform bonding of the cover film to the base part. Contact lens packages comprising an insufficiently bonded cover film cannot be distributed to customers and must be discarded, thus reducing the yield. Also, non-uniformly bonded contact lens packages may have to be sorted out in case the peeling forces required to peel off the cover film in order to get access to the contact lens are outside a predetermined range of peeling forces which are deemed convenient for a user to open the package.

Increasing the mechanical pressure during the bonding process may generally overcome the problem of insufficient bonding. However, increasing the mechanical pressure may result in delamination of the cover film during peel-off of the cover film or may result in a disadvantageous peel-off performance of the cover film, for example in too high a peel-off force required to peel off the cover film in order to open the contact lens package, so that the contact lens packages cannot be distributed to customers. As each batch of cover film has an optimum bonding temperature this may result in that some batches of cover film cannot be used in the packaging of the contact lenses.

It is an object of the present invention to overcome or at least greatly reduce the disadvantages of the prior art described above.

### SUMMARY OF THE INVENTION

This object is achieved by a method and a package holder according to the invention as they are specified in the independent claims. Advantageous aspects are the subject of dependent claims.

According to the invention, the method for thermally bonding together a cover film of an ophthalmic lens package, such as a contact lens package, in particular a soft contact lens package, and a base part of the ophthalmic lens package, is defined in claim 1 and comprises the steps of:
- providing a package holder supporting a base part comprising a depression containing an ophthalmic lens, and a cover film arranged on the base part;
- mechanically pressing the cover film and the base part together along a bonding area having a shape completely enclosing the depression while applying heat to the bonding area, thereby thermally bonding together the cover film and the base part along the bonding area.

The step of providing the package holder supporting the base part includes arranging a flexible support element on an upper surface of the package holder to form a support area supporting the base part, the support area corresponding in shape to and being arranged in alignment with the bonding area. The flexible support element has a flexibility which is higher than the flexibility of the base part.

According to one aspect of the method according to the invention, the step of mechanically pressing the cover film and the base part together along the bonding area while applying heat to the bonding area includes
- providing a heatable contact plate having a contact surface corresponding in shape to the bonding area and
- moving the package holder towards the heatable contact plate, or vice versa, until a predetermined bonding force as well as heat are applied through the contact surface to the bonding area.

According to a particular aspect of the method according to the invention, the predetermined bonding force is less than 650N, in particular less than 500N, for example 300N or less, and the temperature at the contact surface is selectable from a temperature range of 190°C to 210°C. By way of example, the predetermined bonding force may be in the range of 280N to 380N.

According to a further aspect of the method according to the invention, the base part is made of one or more plastics, in particular of a polyolefin, for example polypropylene.

According to a still further aspect of the method according to the invention, the flexible support element is made of an elastic material having an elasticity which is higher than the elasticity of the material the base part is made of.

Yet in accordance with another aspect of the method according to the invention, the elastic material is silicone.

In accordance with the method according to the invention as defined in claim 1, the flexible support element is a ring.

Yet further in accordance with the method according to the invention as defined in claim 1, the ring comprises a lower portion and an upper portion, the upper portion having a width which is larger than the width of the lower portion. The upper portion has a continuous top surface forming the support area. Still further in accordance with the method according to the invention as defined in claim 1, the ring comprises fixation pins formed at the lower portion of the ring.

According to a further aspect of the method according to the invention, the fixation pins are arranged equally spaced along the lower portion of the ring.

Further in accordance with the method according to the invention as defined in claim 1, the upper surface of the package holder comprises a support structure having a support structure upper surface corresponding in shape to the shape of the bonding area and having a groove in the support structure upper surface, with the lower portion of the ring being arranged in the groove and the upper portion of the ring protruding from the support structure upper surface. And further in accordance with the method according to the invention as defined in claim 1, the groove extends only essentially completely along the support structure upper surface so that the groove has a first end and a second end to form a web between the first end and the second end of the groove. The lower portion of the ring is arranged in the groove and has a gap accommodating the web.

Another subject of the invention is a package holder as defined in claim 8, for supporting a base part of an ophthalmic lens package, such as a contact lens package, in particular a soft contact lens package, and a cover film of the ophthalmic lens package arranged on the base part. The package holder comprises an upper surface comprising a support structure having a support structure upper surface with a groove therein. The package holder further comprises a ring made of an elastic material having an elasticity which is higher than the elasticity of the material of the base part to be supported. The ring comprises an upper portion and a lower portion, with the lower portion of the ring being arranged in the groove in the support structure upper surface, and with the upper portion of the ring protruding from the support structure upper surface. The upper portion of the ring has a width which is larger than the width of the lower portion and has a continuous top surface forming a support area to support the base part of the ophthalmic lens package. The support structure of the upper surface of the package holder is shaped to define a cavity for accommodating a depression of the base part of the ophthalmic lens package. The ring comprises fixation pins formed at the lower portion of the ring. The groove extends only essentially completely along the support structure upper surface so that the groove has a first end and a second end to form a web between the first end and the second end of the groove. The lower portion of the ring arranged in the groove has a gap accommodating the web.

Arranging a flexible, in particular elastic or soft, support element on the normally rigid upper surface of the package holder, i.e. providing a flexible support for the base part instead of a rigid support, results in a much more uniform pressure distribution along the bonding area during thermal bonding of the cover film and the base part, especially in case he base part does not evenly rest on the package holder or in case the base part has varies in thickness along the bonding area. Accordingly, the afore-mentioned measures greatly reduce or eliminate the risk of insufficient or disadvantageous thermal bonding of the cover film and the base part.

In addition, the mechanical forces which must be applied to generate an adequate mechanical pressure along the bonding area during thermal bonding may be significantly reduced when compared to the prior art. This may lead to additional advantages. For example, the quality of the thermal bonding may improve as the reduced but more uniform pressure allows for a more uniform thermal bonding of the cover film and the base part resulting in an improved peel-off performance. Improved peel-off performance means that the cover film can be peeled off by a customer more easily resulting in increased convenience for the customer. At lower bonding temperatures, the thermal bonding area may become wider and more uniform when compared to the prior art. At higher bonding temperatures, delamination of the cover film during peel-off can be avoided more reliably.

The term "a support area corresponding in shape to and being arranged in alignment with the bonding area" as used herein means that the support area has essentially the same shape as the bonding area, and that the support area and the bonding area are axially aligned. To have "essentially the same shape" means that the support area has a width which can be smaller, of the same size or larger than the width of the bonding area, as long as a uniform pressure distribution can be achieved along the bonding area during the thermal bonding process. A "uniform pressure distribution" in this regard means that the pressure along the bonding area does not vary more than about 20%, preferably less than 10%, and even more preferably less than 5%.

The method according to the invention allows for the use of thinner cover films when compared to the prior art. While it is possible to use cover films having a thickness of up to 600 µm, cover films typically used in this field have a thickness of more than 200 µm or are even as low as 150 µm. Such cover films can be reliably thermally bonded which may lead to material and cost savings and/or to shorter time intervals needed to accomplish the reliable thermal bonding of the cover film and the base part.

In practice, not only the geometrical dimensions of the base parts, but also the material of the base parts and the material(s) of the cover film may vary to some extent. Therefore, each combination of a specific batch of base parts with a specific batch of cover films has a range of optimum bonding temperatures that result in a favorable peel-off performance and at the same time in a minimum number of unacceptable thermal bonds or no unacceptable thermal bonds. Each change of a batch of base parts or cover film or both may require an adjustment of the range of optimum bonding temperatures to achieve favorable results. The wider the range of optimum bonding temperatures is, the easier it is to combine different batches of base parts with different batches of cover films. The method according to the invention allows for reliably thermally bonding different batches of base parts and different batches of cover films at an increased optimum bonding temperature range when compared to the prior art.

The reduced mechanical forces that may be applied and the resulting reduced mechanical pressures along the bonding area during thermal bonding may reduce the wear of the packaging equipment involved. As a consequence, on one hand the expense for maintenance can be reduced, and on the other hand the life-time of the packaging equipment may increase. In addition, the reduced mechanical forces and the reduced mechanical pressure along the bonding area decrease the amount of energy consumed in the bonding process.

The flexible element can either be pre-manufactured to already have a shape similar to the shape of the bonding area or, in case the shape of the pre-manufactured flexible element is different from the shape of the bonding area, the flexible element can easily be formed to have the desired shape at the time the flexible element is mounted to the package holder.

The material the flexible element may be made of can be any flexible, elastic or soft material which is more compressible than the base part. The term "more compressible" describes the property of the flexible element to be pressed together to a larger extent, i.e. to be pressed together by a larger distance, upon application of the same force or pressure, than the base part.

Another advantage is that the flexible support element can be fixedly mounted to the package holder. In this context, "fixedly mounted" means that the flexible support element is connected to the package holder in a manner such that it remains arranged on the package holder even when the base part is removed from the package holder after thermal bonding, or later in the packaging process.

A further advantage is that the flexible support element (for example the ring) can be easily mounted to and removed from the package holder. For example, since the ring has a lower portion comprising fixation pins and an upper portion which protrudes from the support structure upper surface, the lower portion can be reliably mounted to the groove in the support structure upper surface while the upper portion may provide for a sufficiently wide support area for the base part to rest on during bonding. Yet another advantage of the invention is that the flexible support element is embodied in a manner such that it is prevented from unintentionally moving along the groove as the web on the support structure upper surface and a corresponding gap provided in the lower portion of the ring prevent any such movements.

### BRIEF DESCRIPTION OF THE DRAWINGS

Further advantageous aspects may result from the following detailed description of embodiment of the invention with the aid of the drawings, in which:
- Fig. 1: shows a perspective view of an embodiment of a soft contact lens package;
- Fig. 2: shows a perspective view of an embodiment of a package holder according to the invention;
- Fig. 3: shows a bottom view of the flexible support element of the package holder shown in Fig. 2;
- Fig. 4: shows a cross section along line IV-IV of the flexible support element shown in Fig. 3;
- Fig. 5: shows detail V of Fig. 4 in an enlarged view;
- Fig. 6: shows a cross section along line VI - VI of the flexible support element shown in Fig. 3;
- Fig. 7: shows a cross section along line VII - VII of the flexible support element shown in Fig. 3;
- Fig. 8: shows an arrangement of five base parts and a continuous strip of cover film arranged thereon;
- Fig. 9: shows a heat-sealing station (bonding station) comprising a plurality of tracks with a package holder being arranged on each of the tracks, and
- Fig. 10: shows a bottom view of a heatable contact plate of the heat-sealing station of Fig. 9, the heatable contact plate having a contact surface corresponding in shape to the bonding contour.

### DETAILED DESCRIPTION OF EMBODIMENTS

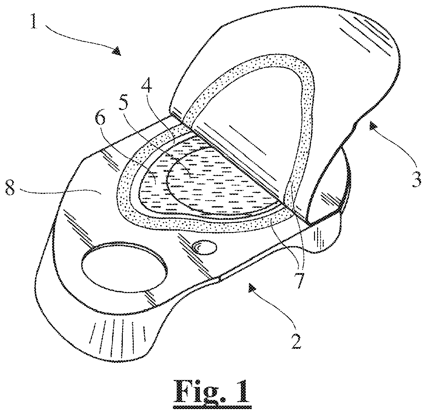

Fig. 1 shows a perspective view of an embodiment of a soft contact lens package 1 (generally representing an ophthalmic lens package) which is of a blister package type. The soft contact lens package 1 comprises a base part 2 and a cover film 3. The base part 2 comprises a depression 4 which contains a soft contact lens 5 (generally representing an ophthalmic lens), which is immersed in a storage and/or preservation liquid 6, for example saline. In the closed state the soft contact lens package 1, the base part 2 and the cover film 3 are tightly bonded together along the bonding area 7, so that neither liquid nor gases can escape from or enter into the depression 4 where the contact lens 5 immersed in the liquid 6 is stored. The bonding area 7 completely surrounds the depression 4. The bonding area 7 (similar to the depression 4 in which the soft contact lens 5 is contained immersed in the liquid 6) may have the shape of a dew drop. The bonding area 7 is located on a portion of the flange 8 which extends outwardly from the depression 4 in a planar manner, and is located directly adjacent to the depression 4.

Typically, the base part 2 is made of plastics, for example it is made from a polyolefin such as polypropylene, and is manufactured through injection molding. Such a base part 2 can be produced very reliably and is inexpensive to manufacture. In addition, such a plastic base part 2 is suitable for thermal bonding without the need to add any additional bonding material (glue, adhesive or the like) before thermally bonding the cover film 3 and the base part 2.

The ophthalmic lens 5 is placed into the depression and the liquid 6 is dispensed into the depression 4 before thermally bonding the base part 2 and the cover film 3 together. Generally, the liquid 6 can be dispensed in the depression 4 before or after the ophthalmic lens 5 is placed into the depression 4, or can be dispensed concurrently with placing the lens into the depression 4.

The cover film 3 may comprise a plurality of layers, for example it may comprise seven layers. The cover film 3 may have a thickness of 600 µm or less, and typically have a thickness of more than 200 µm or are even as low as 150 µm. They can be produced using lamination techniques. That layer of the cover film 3 facing the base part 2 may comprise one or more plastics suitable for thermally bonding together the cover film 3 and the base part 2.

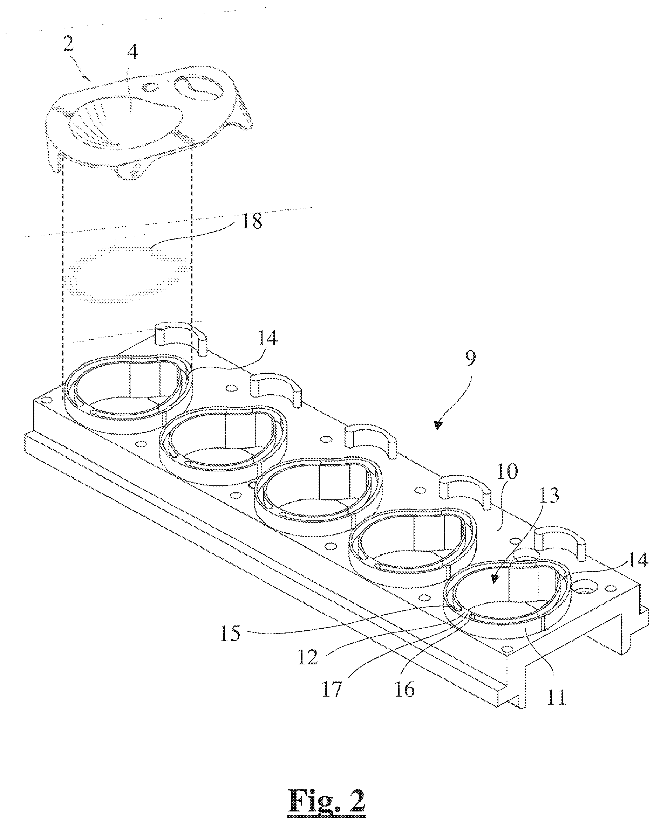

**Fig. 2** shows a perspective exploded view of an embodiment of a package holder 9 according to the invention for supporting the base part 2 of the ophthalmic lens package 1 with the cover film 3 being arranged thereon (the cover film 3 not being shown in Fig. 2). The package holder 9 may be used for thermally bonding the cover film 3 to the base part 2 but is not limited to being used for the bonding operation only, but rather may be used in additional operations during the packaging process. The package holder 9 has an upper surface 10 comprising a plurality of support structures 11 (in the embodiment shown five such support structures 11 are shown) each having a support structure upper surface 12. The shape of the support structure upper surface 12 essentially corresponds to the shape of the bonding area 7. As a consequence, the support structure upper surface 12 completely surrounds the depression 4 of the base part 2 in a shape which is similar to that of the bonding area 7 (once the base part is placed on the package holder 9). The support structure 11 defines a cavity 13 allowing for accommodation of the depression 4 of the base part 2. The cavity 13 is sufficiently wide and deep so that the depression 4 of base part 2 is neither supported by any portion of the support structure 11 nor by any other portion of the upper surface 10 of the package holder 9, but rather the base part 2 is only supported in a portion of the flange 8.

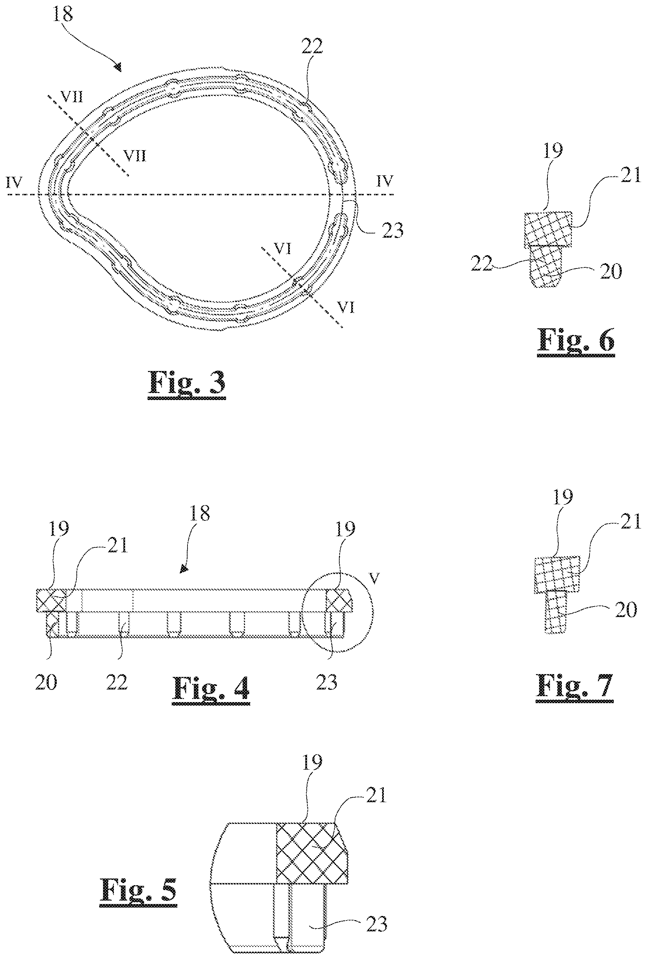

A groove 14 is arranged in the support structure upper surface 12 to partly accommodate and fixedly mount a flexible support element which is embodied as an elastic ring 18, as will be explained in more detail below. The groove 14 does not completely but only essentially completely extend along the support structure upper surface 12 in the circumferential direction. As the groove 14 extends only essentially completely along the support structure upper surface 12, the groove 14 has a first end 15 and a second end 16, with a web 17 being formed between the first end 15 and the second end 16. The elastic ring 18 has a corresponding gap 23 (see Fig. 3, Fig. 4) for accommodating the web 17.

**Fig. 3** **-** **Fig. 7** show an embodiment of the elastic ring 18 already shown in Fig. 2. The ring 18 comprises an upper portion 21 and a lower portion 20, with the width of the lower portion 20 being smaller than the width of the upper portion 21.

As can be seen best from Fig. 4 showing a cross-sectional view of the elastic ring 18 along line IV-IV of Fig. 3, the upper portion 21 of the elastic ring 18 - when viewed in circumferential direction - has a continuous flat top surface 19 forming a support area for supporting the base part 2 (or to be more precise: for supporting a portion of the flange 8 of the base part 2). The lower portion 20 of the elastic ring 18 comprises the afore-mentioned gap 23 (see Fig. 3, Fig. 4, and Fig. 5) for accommodating the web 17 of the support structure upper surface 12, and further comprises a plurality of fixation pins 22. These fixation pins 22 can be seen best in Fig. 4 and Fig. 6, with Fig. 6 showing a cross-section of the ring (through a said fixation pin 22) along line VI-VI of Fig. 3, while Fig. 7 shows a cross-section along line VII-VII (not through a said fixation pin 22). It is evident that at the locations where the fixation pins 22 are arranged, the lower portion 20 of the elastic ring 18 has an increased thickness when compared to the rest of the lower portion 20 of the elastic ring 18 where no such fixations pins 22 are arranged. As can be seen best in Fig. 4, the fixation pins 22 are equidistantly spaced along the lower portion of the ring 18 in circumferential direction.

To mount the elastic ring 18 to the upper support structure 11 of package holder 9, the fixation pins 22 and the lower portion 20 are inserted into the groove 14 arranged in the support structure upper surface 12. The width of the lower portion 20 of the elastic ring 18 at locations where no fixation pins 22 are arranged may be slightly smaller than the width of the groove 14 to allow for easy insertion of the lower portion 20 into the groove 14. At locations where the fixation pins 22 are arranged, the width of the lower portion including the width of the fixation pins may be slightly larger than the width of the groove 14 so that the fixation pins 22 must be pressed into the groove 14. Mounting the elastic ring 18 in the afore-described manner to the groove 14 arranged in the support structure upper surface 12 results in that the elastic ring 18 is fixedly mounted to the support structure 11 and, accordingly, to the package holder 9. The width of the upper portion 21 of the elastic ring 18 is larger than the width of the lower portion (even including the fixation pins 22) and extends across the groove 14 and over the upper surface 12 of the sidewalls forming the boundary of the groove 14, so that the lower surface of the upper portion 21 may rest on the upper surface 12 of the sidewalls forming the boundary of the groove 14. It goes without saying that the elastic ring 18 is mounted to the groove 14 in a manner such that the gap 23 is arranged to accommodate the web 17 of the support structure upper surface 12. After being mounted to the groove 12, the elastic ring 18 has a shape (when looking from above or below) which is similar or identical to the shape of the bonding area 7.

The thickness (height) of the upper portion 21 of the flexible support element 18 is selected such that - taking into account the elasticity of the material the elastic ring 18 is made of, the geometry of the elastic ring 18, and the forces and pressures applied during the bonding process - the upper portion 21 is always compressed only partially, so that the portion of the flange 8 of the base part 2 resting on the flat top surface 19 of the upper portion 21 of the elastic ring 18 always remains supported by the upper portion 21 of the elastic ring 18 and is never directly supported by the support structure upper surface 12.

The package holder 9 including the support structure 11 (however, excluding the elastic ring 18) may be made of a rigid material, for example of a corrosion-resistant metal such as a corrosion-resistant steel or aluminum. The elastic ring 18 can be made of silicone for example.

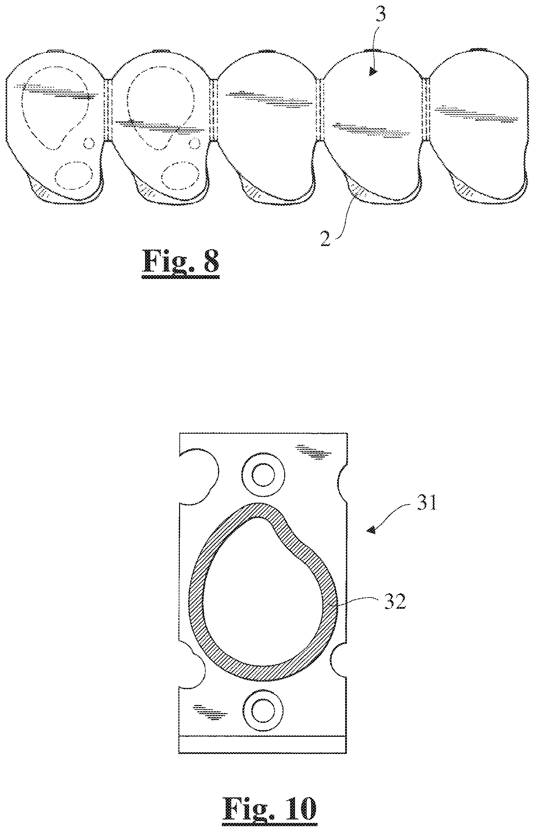

For bonding the cover film 3 to the base part 2, for example five base parts 2 are placed onto the corresponding five support structures 11 of the package holder 9, with an elastic ring 18 being arranged in each of the grooves 14 of the respective support structure upper surface 12, as this is shown in Fig. 2 for one base part and one support structure 11. Thereafter, one soft contact lens 5 (see Fig. 1) is placed into each of the depressions 4 of the five base parts 2, and a predetermined amount of storage and/or preservation solution (e.g. saline) is dispensed into each of the five depressions 4. Next, a pre-cut continuous strip of cover film 3 is arranged on the base parts 2 such that the strip of cover film 3 covers the five base parts 2, as this is shown in **Fig. 8** (the package holder not being shown). However, at that time the strip of cover film 3 is not yet bonded to the base parts 2. This arrangement of base parts 2 and strip of cover film 3 arranged on the package holder 9 is then forwarded to a bonding station (e.g. a heat-sealing station).

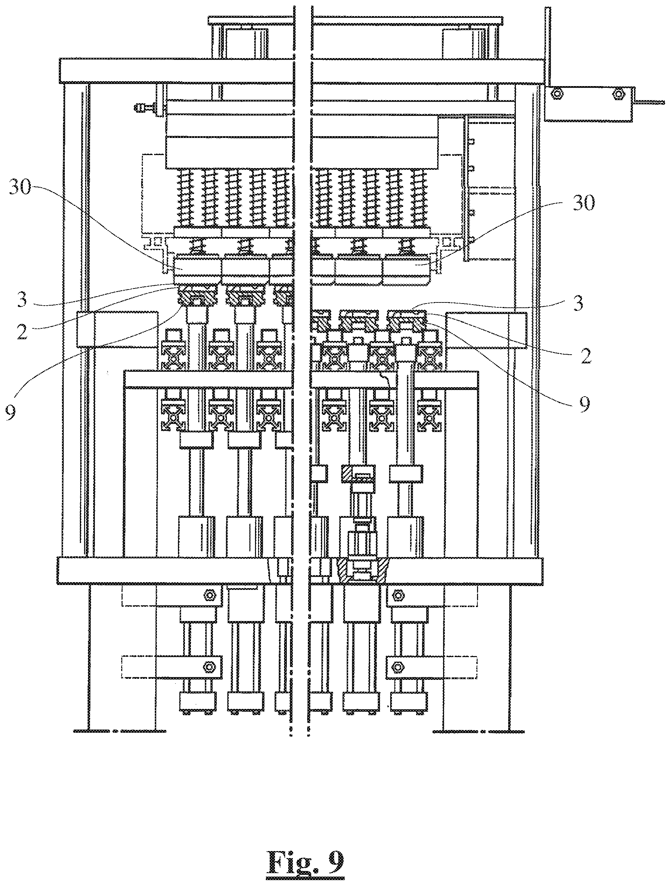

In the heat-sealing station, a corresponding number of five sealing heads 30 are arranged above the package holder 9 with the base parts 2 and the strip of cover film 3 arranged thereon, as this is shown in **Fig. 9**. In Fig. 9, while a plurality of tracks for transporting package holders 9 is shown, only one sealing head 30 per track is shown in Fig. 9 as the package holders 9 are transported in a direction perpendicular to the plane of the paper. Each of the sealing heads 30 comprises a heatable contact plate 31 having a contact surface 32 corresponding in shape to the bonding area 7, as this can be seen best in **Fig. 10**, with the contact surface 32 facing towards the strip of cover film 3 arranged on the base parts 2.

Returning to Fig. 9, for bonding the strip of cover film 3 to the base parts 2 (here: heat-sealing) the package holder 9 carrying the base parts 2 with the strip of cover film 3 arranged thereon is raised towards the heatable contact plates 31 arranged in the five sealing heads 30, until each of the five base parts 2 are pressed with a predetermined force or pressure against the contact surface 32 of the heatable contact plate 31 of the respective sealing head 30 (see left half of Fig. 9) where the package holders 9 of the various tracks are shown in the raised position. The contact surface 32 of the respective heatable contact plate 31 and the flat top surface 19 of the upper portion 21 of the respective elastic ring 18 (i.e. the support area for the base part 2) are axially aligned and correspond in shape to one another and to the bonding area 7. Thus, in case any of the base parts 2 does not evenly rest on the respective flat top surface 19 of the upper portion 21 of the elastic ring 18, upon being pressed against the contact surface 32 of the respective heating plate 31 due to its elasticity the elastic ring 18 is compressed at those locations where the pressure is higher than at other locations until the pressure is evenly distributed along the bonding area 7. The cover film 3 is thereby heat-sealed to each individual base part 2 with a uniform pressure distribution along the bonding area 7, thus resulting in a very uniform sealing of the cover film 3 to the respective individual base part 2 along the respective bonding area 7. Thus, it is possible even with reduced mechanical forces or reduced mechanical pressure to achieve an excellent bonding of the cover film 3 to the base parts 2 on one hand while at the same time the peel-off forces needed to peel off the bonded cover film 3 from the base part are in a range where peeling-off of the cover film can be conveniently performed by the customer.

If the pre-cut strip of cover film 3 is a continuous strip of cover film 3 as shown in Fig. 8, the result is a continuous strip of five heat-sealed contact lens packages. Of course, it is also possible to place an individual precut cover film 3 onto each individual base part 2 to obtain individually heat-sealed contact lens packages.

Embodiments of the invention have been described with the aid of the drawings. However, it is evident that various changes, modifications, and alternatives are conceivable without departing from the teaching underlying the invention. Therefore, the invention is not intended to be limited to the described embodiments but rather is defined by the scope of the appended claims.

## Claims

1. Method for thermally bonding together a cover film (3) of an ophthalmic lens package (1), such as a contact lens package, in particular a soft contact lens package, and a base part (2) of the ophthalmic lens package (1), the method comprising the steps of
- providing a package holder (9) supporting a base part (2) comprising a depression (4) containing an ophthalmic lens (5), and a cover film (3) arranged on the base part (2);
- mechanically pressing the cover film (3) and the base part (2) together along a bonding area (7) having a shape completely enclosing the depression (4) while applying heat to the bonding area (7), thereby thermally bonding together the cover film (3) and the base part (2) along the bonding area (7);
**characterized in that** the step of providing the package holder (9) supporting the base part (2) includes arranging a flexible support element (18) on an upper surface (10) of the package holder (9) to form a support area (19) supporting the base part (2), the support area (19) corresponding in shape to and being arranged in alignment with the bonding area (7),
wherein the flexible support element (18) has a flexibility which is higher than the flexibility of the base part (2),
wherein the flexible support element (18) is a ring (18),
wherein the ring (18) comprises a lower portion (20) and an upper portion (21), the upper portion (21) having a width which is larger than the width of the lower portion (20), and wherein the upper portion (21) has a continuous top surface forming the support area (19),
wherein the ring (18) comprises fixation pins (22) formed at the lower portion (20) of the ring (18),
wherein the upper surface (10) of the package holder (9) comprises a support structure (11) having a support structure upper surface (12) corresponding in shape to the shape of the bonding area (7) and having a groove (14) in the support structure upper surface (12), with the lower portion (20) of the ring (18) being arranged in the groove (14) and with the upper portion (21) of the ring (18) protruding from the support structure upper surface (12),
and wherein the groove (14) extends only essentially completely along the support structure upper surface (12) so that the groove (14) has a first end (15) and a second end (16) to form a web (17) between the first end (15) and the second end (16) of the groove (14), and wherein the lower portion (20) of the ring (18) arranged in the groove (12) has a gap (23) accommodating the web (17).

2. Method according to claim 1, wherein the step of mechanically pressing the cover film (3) and the base part (2) together along the bonding area (7) while applying heat to the bonding area (7) includes
- providing a heatable contact plate (31) having a contact surface (32) corresponding in shape to the bonding area (7) and
- moving the package holder (9) towards the heatable contact plate (31), or vice versa, until a predetermined bonding force as well as heat are applied through the contact surface to the bonding area (7).

3. Method according to claim 2, wherein the predetermined bonding force is less than 650N, in particular less than 500N, for example 300N or less, and wherein the temperature at the contact surface is selectable from a temperature range of 190°C to 210°C.

4. Method according to anyone of the preceding claims, wherein the base part (2) is made of plastics, in particular of a polyolefin, for example polypropylene.

5. Method according to anyone of the preceding claims, wherein the flexible support element (18) is made of an elastic material having an elasticity which is higher than the elasticity of the material the base part (2) is made of.

6. Method according to claim 5, wherein the elastic material is silicone.

7. Method according to any one of the preceding claims, wherein the fixation pins (22) are arranged equally spaced along the lower portion (20) of the ring (18).

8. Package holder (9) for supporting a base part (2) of an ophthalmic lens package (1), such as a contact lens package, in particular a soft contact lens package, and a cover film (3) of the ophthalmic lens package (1) arranged on the base part (2), the package holder (9) comprising:
- an upper surface (10) comprising a support structure (11) having a support structure upper surface (12) with a groove (14) therein;
**characterized in that** the package holder further comprises
- a ring (18) made of an elastic material having an elasticity which is higher than the elasticity of the material of the base part (2) to be supported,
the ring (18) comprising an upper portion (21) and a lower portion (20), with the lower portion (20) of the ring (18) being arranged in the groove (14) in the support structure upper surface (12), and with the upper portion (21) of the ring (18) protruding from the support structure upper surface (12), the upper portion (21) of the ring (18) having a width which is larger than the width of the lower portion (20) and further having a continuous top surface forming a support area (19) to support the base part (2) of the ophthalmic lens package (9), and
wherein the support structure (11) of the upper surface (10) of the package holder (9) is shaped to define a cavity (13) for accommodating a depression (4) of the base part (2) of the ophthalmic lens package (1),
wherein the ring (18) comprises fixation pins (22) formed at the lower portion (20) of the ring (18),
wherein the groove (14) extends only essentially completely along the support structure upper surface (12) so that the groove (14) has a first end (15) and a second end (16) to form a web (17) between the first end (15) and the second end (16) of the groove (14), and wherein the lower portion (20) of the ring (18) arranged in the groove (12) has a gap (23) accommodating the web (17).

## Patentansprüche

1. Verfahren zur thermischen Verbindung einer Deckfolie (3) einer ophthalmischen Linsenverpackung (1), wie einer Kontaktlinsenverpackung, insbesondere einer Verpackung für weiche Kontaktlinsen, mit einem Basisteil (2) der ophthalmischen Linsenverpackung (1), wobei das Verfahren die Schritte umfasst:
- Bereitstellen eines Verpackungshalters (9), der ein Basisteil (2) trägt, das eine Mulde (4) umfasst, die eine ophthalmische Linse (5) enthält, und einer Deckfolie (3), die auf dem Basisteil (2) angeordnet ist;
- mechanisches Zusammenpressen der Deckfolie (3) und des Basisteils (2) entlang eines Verbindungsbereichs (7) mit einer Form, welche die Mulde (4) vollständig umschließt, während Wärme auf den Verbindungsbereich (7) angewendet wird, wodurch die Deckfolie (3) und das Basisteil (2) entlang des Verbindungsbereichs (7) thermisch verbunden werden;
**dadurch gekennzeichnet, dass** der Schritt des Bereitstellens des Verpackungshalters (9), welcher das Basisteil (2) trägt, Anordnen eines flexiblen Trägerelements (18) auf einer oberen Seite (10) des Verpackungshalters (9) einschließt, um einen Trägerbereich (19) zu bilden, der das Basisteil (2) trägt, wobei der Trägerbereich (19) in der Form dem Verbindungsbereich (7) entspricht und damit ausgerichtet angeordnet ist,
wobei das flexible Trägerelement (18) eine Flexibilität hat, die höher als die Flexibilität des Basisteils (2) ist,
wobei das flexible Trägerelement (18) ein Ring (18) ist,
wobei der Ring (18) einen unteren Anteil (20) und einen oberen Anteil (21) umfasst, wobei der obere Anteil (21) eine Breite aufweist, die größer als die Breite des unteren Anteils (20) ist, und wobei der obere Anteil (21) eine kontinuierliche Oberseite aufweist, die den Trägerbereich (19) bildet,
wobei der Ring (18) Fixierstifte (22) umfasst, die an dem unteren Anteil (20) des Rings (18) gebildet sind,
wobei die obere Seite (10) des Verpackungshalters (9) eine Trägerstruktur (11) mit einer oberen Trägerstrukturseite (12) aufweist, die in der Form der Form des Verbindungsbereichs (7) entspricht und eine Rille (14) in der oberen Trägerstrukturseite (12) aufweist, wobei der untere Anteil (20) des Rings (18) in der Rille (14) angeordnet ist und der obere Anteil (21) des Rings (18) von der oberen Trägerstrukturseite (12) vorspringt,
und wobei die Rille (14) sich nur im Wesentlichen vollständig entlang der oberen Trägerstrukturseite (12) erstreckt, so dass die Rille (14) ein erstes Ende (15) und ein zweites Ende (16) aufweist, um eine Bahn (17) zwischen dem ersten Ende (15) und dem zweiten Ende (16) der Rille (14) zu bilden, und wobei der untere Anteil (20) des Rings (18), der in der Rille (12) angeordnet ist, eine Lücke (23) aufweist, in der die Bahn (17) untergebracht ist.

2. Verfahren nach Anspruch 1, wobei der Schritt des mechanischen Zusammenpressens der Deckfolie (3) und des Basisteils (2) entlang des Verbindungsbereichs (7), während Wärme auf den Verbindungsbereich (7) angewendet wird, einschließt:
- Bereitstellen einer heizbaren Kontaktplatte (31) mit einer Kontaktoberfläche (32), die in der Form dem Bindungsbereich (7) entspricht, und
- Bewegen des Verpackungshalters (9) in Richtung der heizbaren Kontaktplatte (31), oder anders herum, bis eine vorgegebene Verbindungskraft sowie Wärme durch die Kontaktoberfläche hindurch auf den Verbindungsbereich (7) angewendet werden.

3. Verfahren nach Anspruch 2, wobei die vorgegebene Verbindungskraft weniger als 650 N, insbesondere weniger als 500 N, beispielsweise 300 N oder weniger ist, und wobei die Temperatur der Kontaktoberfläche aus einem Temperaturbereich von 190 °C bis 210 °C auswählbar ist.

4. Verfahren nach einem der vorhergehenden Ansprüche, wobei das Basisteil (2) aus Kunststoffen gefertigt ist, insbesondere aus einem Polyolefin, beispielsweise Polypropylen.

5. Verfahren nach einem der vorhergehenden Ansprüche, wobei das flexible Trägerelement (18) aus einem elastischen Material mit einer Elastizität gefertigt ist, die höher als die Elastizität des Materials ist, aus dem das Basisteil (2) gefertigt ist.

6. Verfahren nach Anspruch 5, wobei das elastische Material Silikon ist.

7. Verfahren nach einem der vorhergehenden Ansprüche, wobei die Fixierstifte (22) in gleichförmigem Abstand entlang des unteren Anteils (20) des Rings (18) angeordnet sind.

8. Verpackungshalter (9) zum Tragen eines Basisteils (2) einer ophthalmischen Linsenverpackung (1), wie einer Kontaktlinsenverpackung, insbesondere einer Verpackung für weiche Kontaktlinsen, und einer Deckfolie (3) der ophthalmischen Linsenverpackung (1), die auf dem Basisteil (2) angeordnet ist, wobei der Verpackungshalter (9) umfasst:
- eine obere Seite (10), die eine Trägerstruktur (11) mit einer oberen Trägerstrukturseite (12) umfasst, die eine Rille (14) darin aufweist;
**dadurch gekennzeichnet, dass** der Verpackungshalter des Weiteren umfasst:
- einen Ring (18), der aus einem elastischen Material mit einer Elastizität gefertigt ist, die höher als die Elastizität eines Materials des Basisteils (2) ist, das getragen werden soll,
wobei der Ring (18) einen oberen Anteil (21) und einen unteren Anteil (20) umfasst, wobei der untere Anteil (20) des Rings (18) in der Rille (14) in der oberen Trägerstrukturseite (12) angeordnet ist, und wobei der obere Anteil (21) des Rings (18) von der oberen Trägerstrukturseite (12) vorspringt, wobei der obere Anteil (21) des Rings (18) eine Breite aufweist, die größer als die Breite des unteren Anteils (20) ist und des Weiteren eine kontinuierliche Oberseite aufweist, die einen Trägerbereich (19) bildet, um das Basisteil (2) der ophthalmischen Linsenverpackung (9) zu tragen, und wobei die Trägerstruktur (11) der oberen Seite (10) des Verpackungshalters (9) geformt ist, um einen Hohlraum (13) zum Unterbringen einer Mulde (4) des Basisteils (2) der ophthalmischen Linsenverpackung (1) zu definieren,
wobei der Ring (18) Fixierstifte (22) umfasst, die an dem unteren Anteil (20) des Rings (18) gebildet sind,
wobei die Rille (14) sich nur im Wesentlichen vollständig entlang der oberen Trägerstrukturseite (12) erstreckt, so dass die Rille (14) ein erstes Ende (15) und ein zweites Ende (16) aufweist, um eine Bahn (17) zwischen dem ersten Ende (15) und dem zweiten Ende (16) der Rille (14) zu bilden, und wobei der untere Anteil (20) des Rings (18), der in der Rille (12) angeordnet ist, eine Lücke (23) aufweist, in welcher die Bahn (17) untergebracht wird.

## Revendications

1. Procédé destiné à thermosouder ensemble un film d'operculage (3) d'un emballage de lentille ophtalmique (1), tel qu'un emballage de lentille de contact, en particulier un emballage de lentille de contact molle, et une partie de base (2) de l'emballage de lentille ophtalmique (1), le procédé comprenant les étapes suivantes :
- obtention d'un support d'emballage (9) supportant une partie de base (2) comprenant une cuvette (4) contenant une lentille ophtalmique (5), et un film d'operculage (3) disposé sur la partie de base (2) ;
- pressage mécanique du film d'operculage (3) et de la partie de base (2) ensemble le long d'une zone de soudage (7) ayant une forme entourant complètement la cuvette (4) tout en appliquant de la chaleur à la zone de soudage (7), pour thermosouder ainsi ensemble le film d'operculage (3) et la partie de base (2) le long de la zone de soudage (7) ;
**caractérisé en ce que** l'étape d'obtention du support d'emballage (9) supportant la partie de base (2) comporte la mise en place d'un élément de support flexible (18) sur une surface supérieure (10) du support d'emballage (9) pour former une zone de support (19) supportant la partie de base (2), la zone de support (19) correspondant en forme à et étant disposée en alignement avec la zone de soudage (7),
dans lequel l'élément de support flexible (18) a une flexibilité qui est supérieure à la flexibilité de la partie de base (2),
dans lequel l'élément de support flexible (18) est un anneau (18),
dans lequel l'anneau (18) comprend une partie inférieure (20) et une partie supérieure (21), la partie supérieure (21) ayant une largeur qui est plus grande que la largeur de la partie inférieure (20), et la partie supérieure (21) ayant une surface supérieure continue formant la zone de support (19),
dans lequel l'anneau (18) comprend des ergots de fixation (22) formés au niveau de la partie inférieure (20) de l'anneau (18),
dans lequel la surface supérieure (10) du support d'emballage (9) comprend une structure de support (11) ayant une surface supérieure de structure de support (12) dont la forme correspond à la forme de la zone de soudage (7) et ayant une rainure (14) dans la surface supérieure de structure de support (12), avec la partie inférieure (20) de l'anneau (18) disposée dans la rainure (14) et avec la partie supérieure (21) de l'anneau (18) faisant saillie depuis la surface supérieure de structure de support (12),
et dans lequel la rainure (14) ne s'étend que presque complètement le long de la surface supérieure de structure de support (12) de telle sorte que la rainure (14) a une première extrémité (15) et une deuxième extrémité (16) pour former une bande (17) entre la première extrémité (15) et la deuxième extrémité (16) de la rainure (14), et dans lequel la partie inférieure (20) de l'anneau (18) disposée dans la rainure (12) a un espace (23) accueillant la bande (17).

2. Procédé selon la revendication 1, dans lequel l'étape de pressage mécanique du film d'operculage (3) et de la partie de base (2) ensemble le long de la zone de soudage (7) tout en appliquant de la chaleur à la zone de soudage (7) comporte
- l'obtention d'une plaque de contact chauffable (31) ayant une surface de contact (32) correspondant en forme à la zone de soudage (7) et
- le déplacement du support d'emballage (9) vers la plaque de contact chauffable (31), ou vice versa, jusqu'à ce qu'une force de soudage prédéterminée ainsi que de la chaleur soient appliquées par le biais de la surface de contact à la zone de soudage (7).

3. Procédé selon la revendication 2, dans lequel la force de soudage prédéterminée est inférieure à 650 N, en particulier inférieure à 500 N, par exemple de 300 N ou moins, et dans lequel la température à la surface de contact peut être choisie dans une gamme de températures de 190 °C à 210 °C.

4. Procédé selon l'une quelconque des revendications précédentes, dans lequel la partie de base (2) est constituée de matière plastique, en particulier d'une polyoléfine, par exemple de polypropylène.

5. Procédé selon l'une quelconque des revendications précédentes, dans lequel l'élément de support flexible (18) est constitué d'un matériau élastique ayant une élasticité qui est supérieure à l'élasticité du matériau dont est constituée la partie de base (2).

6. Procédé selon la revendication 5, dans lequel le matériau élastique est du silicone.

7. Procédé selon l'une quelconque des revendications précédentes, dans lequel les ergots de fixation (22) sont disposés à égale distance le long de la partie inférieure (20) de l'anneau (18).

8. Support d'emballage (9) destiné à supporter une partie de base (2) d'un emballage de lentille ophtalmique (1), tel qu'un emballage de lentille de contact, en particulier un emballage de lentille de contact molle, et un film d'operculage (3) de l'emballage de lentille ophtalmique (1) disposé sur la partie de base (2), le support d'emballage (9) comprenant :
- une surface supérieure (10) comprenant une structure de support (11) ayant une surface supérieure de structure de support (12) avec une rainure (14) à l'intérieur ;
**caractérisé en ce que** le support d'emballage comprend en outre
- un anneau (18) constitué d'un matériau élastique ayant une élasticité qui est supérieure à l'élasticité du matériau de la partie de base (2) devant être supportée,
l'anneau (18) comprenant une partie supérieure (21) et une partie inférieure (20), avec la partie inférieure (20) de l'anneau (18) disposée dans la rainure (14) dans la surface supérieure de structure de support (12), et avec la partie supérieure (21) de l'anneau (18) faisant saillie depuis la surface supérieure de structure de support (12), la partie supérieure (21) de l'anneau (18) ayant une largeur qui est plus grande que la largeur de la partie inférieure (20) et ayant en outre une surface supérieure continue formant une zone de support (19) pour supporter la partie de base (2) de l'emballage de lentille ophtalmique (9), et
dans lequel la structure de support (11) de la surface supérieure (10) du support d'emballage (9) est façonnée pour définir une cavité (13) destinée à accueillir une cuvette (4) de la partie de base (2) de l'emballage de lentille ophtalmique (1),
dans lequel l'anneau (18) comprend des ergots de fixation (22) formés au niveau de la partie inférieure (20) de l'anneau (18),
dans lequel la rainure (14) ne s'étend que presque complètement le long de la surface supérieure de structure de support (12) de telle sorte que la rainure (14) a une première extrémité (15) et une deuxième extrémité (16) pour former une bande (17) entre la première extrémité (15) et la deuxième extrémité (16) de la rainure (14), et dans lequel la partie inférieure (20) de l'anneau (18) disposée dans la rainure (12) a un espace (23) accueillant la bande (17).
